Europäisches Patentamt

European Patent Office

Office européen des brevets

(11) Numéro de publication: **0 075 516**
**B1**

(19)

(12) **FASCICULE DE BREVET EUROPEEN**

(45) Date de publication du fascicule du brevet:
**27.08.86**

(21) Numéro de dépôt: **82401693.5**

(22) Date de dépôt: **20.09.82**

(51) Int. Cl.⁴: **C 03 C 17/23**

(54) Fabrication d'un verre revêtu d'un film d'oxyde de titane.

(30) Priorité: **21.09.81 JP 148965/81**

(43) Date de publication de la demande:
**30.03.83 Bulletin 83/13**

(45) Mention de la délivrance du brevet:
**27.08.86 Bulletin 86/35**

(84) Etats contractants désignés:
**BE DE FR IT LU NL SE**

(56) Documents cités:
**EP - A - 0 025 738**
**DE - A - 2 029 037**
**FR - A - 2 380 997**
**GB - A - 2 067 540**

(73) Titulaire: **SAINT-GOBAIN VITRAGE, Les Miroirs 18, avenue d'Alsace, F-92400 Courbevoie (FR)**

(84) Etats contractants désignés: **BE FR IT LU NL SE**

(73) Titulaire: **VEGLA Vereinigte Glaswerke GmbH, Viktoriaallee 3-5, D-5100 Aachen (DE)**

(84) Etats contractants désignés: **DE**

(72) Inventeur: **Kawahara, Hidéo, 2-8-3-205 Minami Sakurazuka, Toyonaka-shi Osaka (JP)**
Inventeur: **Sakata, Nobuhiro, 2-6-6-2 Komatsu Nishi-Machi, Nishinomiya-shi Hyogo (JP)**
Inventeur: **Coulon, Jean-Claude, rue de Brintet, F-71640 Mercurey (FR)**

(74) Mandataire: **Leconte, Jean-Gérard et al, Saint-Gobain Recherche 39, Quai Lucien Lefranc, F-93304 Aubervilliers Cedex (FR)**

ACTORUM AG

## Description

La présente invention se rapporte à la fabrication de verres revêtus d'un film d'oxyde métallique et elle concerne plus particulièrement les verres à fort coefficient de reflexion, notamment ceux recouverts d'un film d'oxyde de titane.

On sait que par dépôt de films d'oxydes métalliques sur la surface d'un verre, on peut modifier ses caractéristiques, notamment optiques et électriques.

Ainsi par exemple, on fabrique des verres antichaleur réfléchissant de façon appréciable le rayonnement solaire. Ces verres employés dans le bâtiment permettent de réduire les charges de climatisation, et en outre ils ont un aspect très esthétique.

De nombreux oxydes sont connus pour leurs propriétés de réflexion du rayonnement calorifique, lorsqu'ils sont déposés en film sur des verres. Parmi eux, on peut citer le fer, le chrome, le cobalt, le titane, l'étain et l'aluminium. Les films à base d'oxydes de fer, de chrome, de cobalt ou de titane sont les plus utilisés à cause de leurs bonnes performances, optiques d'une part, de résistance chimique et à l'abrasion d'autre part.

Pour obtenir un film d'oxydes à la surface du verre, on pratique en général de la façon suivante:

Un composé organique du métal considéré est mis en solution dans un solvant organique, on pulvérise sur le verre porté à haute température, généralement supérieure à 500 °C, le composé organométallique en solution qui se décompose sous l'effet de la chaleur au contact du verre puis s'oxyde pour former une couche d'oxyde métallique sur le verre. La demande de brevet GB 2 067 540 décrit par exemple l'obtention d'un film d'oxyde de titane sur des récipients en verre par projection d'une solution d'un tétralkyle titanate dans un solvant type kerosene, sur la surface de verre échauffée de préférence entre 482 °C et 593 °C.

Pour éviter la pollution par les solvants et le refroidissement du verre préjudiciable à la bonne décomposition du composé métallique, on cherche de préférence à projeter sur le verre les composés métalliques non plus en solution mais directement en poudre.

Ainsi on peut projeter sur le verre des poudres de sels organo-métalliques complexes, en particulier des poudres d'acéthylacétonates métalliques.

Un tel emploi de poudres est décrit notamment dans les brevets français 2 277 048, 2 277 049, 2 317 241, 2 314 902 ou encore dans le document EP 0025738.

Les verres qu'on cherche à fabriquer doivent réfléchir le rayonnement visible en particulier pour une question d'esthétisme, mais également le rayonnement calorifique qui se situe à la fois dans le visible et l'infra-rouge solaire, pour diminuer les charges de climatisation.

De tels verres ont déjà été obtenus à partir de films d'oxydes de fer, de chrome et de cobalt avec comme composant principal l'oxyde de fer.

Mais la recherche de meilleures performances, notamment une meilleure reflexion du rayonnement calorifique spécialement dans le visible, amène à rechercher de nouvelles poudres qui en outre soient exploitables sur le plan industriel.

La présente invention propose dans ce cadre de fabriquer un verre à fort coefficient de reflexion, recouvert d'oxyde de titane, obtenu par pulvérisation de poudres de titanate de méthyle, $Ti(OCH_3)_4$, sur la surface du verre porté à haute température.

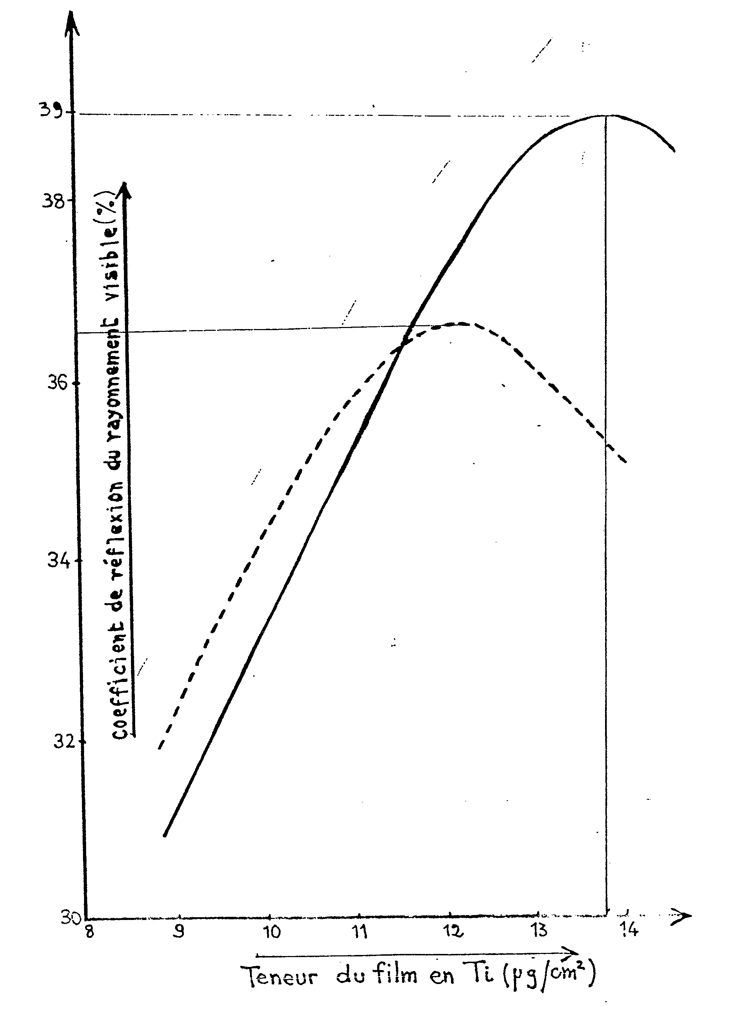

L'invention sera maintenant décrite plus en détail en référence à la figure jointe qui représente la variation des coefficients de reflexion de verres revêtus, dans le domaine du visible, en fonction de la teneur en titane des films de revêtement.

Les verres connus jusqu'à ce jour, recouverts d'oxyde de titane, obtenus par pulvérisation d'une solution d'ester d'acides gras ou d'hydrocarbures aromatiques contenant des sels complexes d'acètylacétonate de titane sur leur surface portée à plus de 500 °C, ne présentent qu'un coefficient de réflexion dans le visible, d'au maximum 36,5%.

Un dépôt d'oxyde de titane obtenu par pulvérisation d'une poudre de titanate de méthyle $Ti(OCH_3)_4$ sur un verre porté à 460 °C permet d'atteindre une réflexion du rayonnement visible de 38 à 39%.

On constate donc qu'une meilleure réflexion est obtenue, même en chauffant le verre à une température plus basse. Cependant, bien qu'une température de 460 °C soit suffisante, il est malgré tout souhaitable de travailler à des températures plus élevées et de préférence supérieurs à 500 °C.

Cette poudre de $Ti(OCH_3)_4$ utilisée pour le revêtement du verre doit avoir un taux d'humidité inférieur à 1% et de préférence inférieur à 0,5%, elle doit avoir une granulométrie inférieure à 100 μm et de préférence inférieure à 15 μm.

Un verre recouvert d'un film d'oxyde de titane obtenu par pulvérisation de la poudre de $Ti(OCH_3)_4$ ayant les caractéristiques précédemment décrites, présente une résistance chimique d'une part et mécanique, c'est à dire à l'abrasion, d'autre part, supérieure ou au moins égale à celle des verres jusqu'alors connus, c'est à dire fabriqués par pulvérisation d'une solution d'acétylacétonate de titane.

Des essais comparatifs ont été effectués sur des verres classiques, c'est à dire revêtus d'oxyde de titane par pulvérisation d'une solution d'acétylacétonate de titane, et sur des verres selon l'invention c'est à dire revêtus d'oxyde de titane obtenu par projection de la poudre de titanate de méthyle précédemment définie. Ces essais ont permis de vérifier la supériorité des verres selon l'invention.

Pour fabriquer ces verres d'essais selon l'invention, on a déshydraté du titanate de méthyle $Ti(OCH_3)_4$ à 20 °C à l'aide d'un déssicateur à vide, jusqu'à atteindre une teneur en eau du produit de 0,3% en poids, puis on a broyé pour obtenir une poudre de granulométrie inférieure à 15 μm (granulométrie moyenne: 6,8 μm). Par ailleurs, on a chauffé dans un four électrique, des plaques de verre de 300 mm × 300 mm × 5 mm pendant 4mn pour les porter à 565 °C. Sur la surface de plaques ainsi chauffées, on a pulvérisé la poudre ainsi obtenue à l'aide d'un pistolet en faisant varier d'une plaque à l'autre, la durée de pulvérisation afin d'obtenir des films d'oxyde de titane de différentes épaisseurs.

Pour permettre la comparaison, on a par ailleurs fabriqué des échantillons de verres tels que connus jusqu'ici. Pour cela, on a préparé une solution d'acétate d'éthyle contenant 25% en poids d'acéthyl acétonate de titane, et on a pulvérisé cette solution avec un pistolet pulvérisateur sur des plaques de verre identiques aux précédentes de 300 mm × 300 mm × 5 mm chauffées comme précédemment, c'est à dire pendant 4 mn dans le même four électrique à la même température.

On a fait varier le temps de pulvérisation d'une plaque de verre à l'autre afin d'obtenir des plaques ayant des films d'oxyde de titane d'épaisseurs différentes.

On a ensuite mesuré des coefficients de réflexion dans le visible pour chacun des verres revêtus obtenus. Puis on a mesuré la teneur en titane en µg/cm² des différents films. Les mesures ont été effectuées par fluorescence X avec étalonnage des résultats de fluorescence X grâce à des analyses chimiques des films d'oxyde de titane formés sur les verres, après décollement desdits films par trempage des verres revêtus dans un bain d'acide sulfurique porté à 140 °C.

Les résultats de ces mesures sont donnés sur les courbes de la figure jointe. La teneur en titane des films (exprimée en µg/cm²) est portée en abcisse tandis que les coefficients de réflexion sont en ordonnée. La courbe en trait continu correspond aux valeurs obtenues pour les verres fabriqués selon la présente invention, tandis que la courbe en pointillés correspond aux verres classiques de référence.

On peut voir que les verres selon l'invention présentent un coefficient de reflexion dans le visible nettement plus élevé que les verres classiques, pour une teneur en titane supérieure à 11,5 µg/cm².

Après les analyses par fluorescence X, chaque plaque de verre a été partagée en deux échantillons. L'un des échantillons étant alors soumis à un essai de résistance aux acides, l'autre étant soumis à un essai de résistance aux bases. L'essai de résistance aux acides, ou aux bases, consiste à mesurer le nombre de jours au bout desquels un échantillon plongé dans une solution normale à 20 °C d'acide chlorhydrique, respectivement de soude caustique, commence à se détériorer.

On constate que les résistances aux agents chimiques des échantillons de verre fabriqués selon l'invention sont au moins égales sinon supérieures à celles des échantillons produits par les méthodes classiques.

Les résultats des essais de résistance aux agents chimiques, en même temps que les mesures de reflexion, sont données dans le tableau disposé en fin de description.

On constate donc qu'un verre recouvert d'oxyde de titane fabriqué selon l'invention présente de meilleures caractéristiques de réflexion au visible qu'un verre classique et que parmi ces verres selon l'invention sont particulièrement avantageux ceux dont le film d'oxyde de titane présente

Résistance des films d'oxyde de titane aux agents chimiques et réflexion du rayonnement visible

|  | Echantillons | Teneur du film en Ti (µg/cm²) | % de réflexion du rayonnement visible | résistance aux acides (jours) | résistance aux bases (jours) |
|---|---|---|---|---|---|
| verres fabriqués selon l'invention | 1 | 9.0 | 31.2 | 4 | 12 |
| | 2 | 9.4 | 31.9 | 6 | 15 |
| | 3 | 9.8 | 33.4 | 6 | 17 |
| | 4 | 10.5 | 34.0 | 15 | + de 20 |
| | 5 | 11.2 | 35.3 | 17 | + de 20 |
| | 6 | 12.6 | 37.9 | 17 | 17 |
| | 7 | 12.9 | 38.7 | + de 20 | + de 20 |
| | 8 | 13.4 | 38.8 | + de 20 | + de 20 |
| | 9 | 14.0 | 39.1 | + de 20 | + de 20 |
| | 10 | 14.4 | 38.8 | + de 20 | + de 20 |
| verres fabriqués par dépôt d'acéthylacétonate de titane en solution | 1 | 9.1 | 32.1 | + de 20 | 11 |
| | 2 | 9.6 | 34.0 | + de 20 | 14 |
| | 3 | 10.0 | 34.5 | 17 | 14 |
| | 4 | 10.5 | 34.9 | 14 | 17 |
| | 5 | 11.0 | 36.0 | 14 | 8 |
| | 6 | 11.4 | 35.8 | 10 | 4 |
| | 7 | 12.1 | 36.5 | 10 | 8 |
| | 8 | 12.8 | 36.0 | 10 | 4 |
| | 9 | 13.3 | 35.5 | 17 | 12 |
| | 10 | 14.2 | 35.0 | 12 | 14 |

une épaisseur telle que la teneur en titane est au moins égale à 11,5 µg/cm² et de préférence de l'ordre de 14 µg/cm². La réflexion dans le visible pour de tels verres est améliorée par rapport aux verres classiques.

Nous avons décrit la fabrication de verres revêtus d'oxyde de titane par pulvérisation de la poudre de titanate de méthyle à l'aide d'un pistolet pulvérisateur, mais le dépôt de la poudre de titanate de méthyle est également possible par d'autres méthodes, notamment par introduction des verres portés à haute température dans une atmosphère contenant une suspension de ladite poudre.

**Revendications**

1. Procédé de fabrication d'un verre, ayant un coefficient de relexion dans le visible supérieur à 36,5%, revêtu d'un film d'oxyde de titane par mise en contact de composés de titane pyrolisables et du verre porté à haute température, caractérisé en ce que le composé de titane est une poudre de titanate de méthyle Ti(OCH$_3$)$_4$, d'une granulométrie inférieure à 100 µm et présentant un taux d'humidité inférieur à 1%.

2. Procédé selon la revendication 1 caractérisé en ce que la poudre a une granulométrie inférieure à 15 µm.

3. Procédé selon la revendication 1 ou 2 caractérisé en ce que la poudre présente une teneur en eau inférieure à 0,5% en poids.

4. Procédé selon l'une des revendications 1 à 3 caractérisé en ce que le verre destiné à recevoir le composé métallique est porté à une température au moins égale à 460 °C.

5. Verre revêtu d'un film d'oxyde de titane obtenu par le procédé selon les revendications 1 à 4, caractérisé en ce que la teneur en titane est supérieure à 11,5 µg/cm² et en ce qu'il présente un coefficient de reflexion dans le visible supérieur à 36,5%.

6. Verre selon la revendication 5, caractérisé en ce que la teneur en titane du film d'oxyde est de l'ordre de 14 µg/cm².

**Claims**

1. A method of making a glass, having a coefficient of reflection for visible light greater than 36.5%, coated with a film of titanium oxide by putting pyrolysable titanium compounds in contact with the glass which is at an elevated temperature, characterised in that the titanium compound is a methyl titanate Ti(OCH$_3$)$_4$ powder having a grain size less than 100 µm and having a moisture content less than 1%.

2. A method according to claim 1, characterised in that the powder has a grain size less than 15 µg.

3. A method according to claim 1 or 2, characterised in that the powder has a water content less than 0,5% by weight.

4. A method according to one of claims 1 to 3, characterised in that the glass to receive the metallic compound is brought to a temperature of at least 460 °C.

5. A glass coated with a film of titanium oxide obtained by a method according to claims 1 to 4, characterised in that the content of titanium is greater than 11.5 µg/cm² and in that it has a coefficient of reflection for visible light greater than 36.5%.

6. A glass according to claim 5, characterised in that the content of titanium in the oxide film is of the order of 14 µg/cm².

**Patentansprüche**

1. Verfahren zur Herstellung von Glas mit einem Reflexionsgrad im sichtbaren Bereich von mehr als 36,5%, das durch Aufbringen von pyrolysierbaren Titanverbindungen auf das auf hohe Temperatur erhitzte Glas mit einem Titanoxidfilm beschichtet ist, dadurch gekennzeichnet, dass die Titanverbindung Methyltitanatpulver Ti(OCH$_3$)$_4$ mit einer Korngrösse von unterhalb 100 µm und einem Feuchtigkeitsgehalt von weniger als 1% ist.

2. Verfahren nach Anspruch 1, dadurch gekennzeichnet, dass das Pulver eine Korngrösse von unterhalb 15 µm aufweist.

3. Verfahren nach Anspruch 1 oder 2, dadurch gekennzeichnet, dass das Pulver einen Wassergehalt von weniger als 0,5 Gew.-% aufweist.

4. Verfahren nach einem der Ansprüche 1 bis 3, dadurch gekennzeichnet, dass das Glas, auf das die Metallverbindung aufgebracht werden soll, auf eine Temperatur von wenigstens 460 °C erwärmt wird.

5. Mit einem Titanoxidfilm beschichtetes, durch das Verfahren nach den Ansprüchen 1 bis 4 erhaltenes Glas, dadurch gekennzeichnet, dass der Gehalt an Titan höher ist als 11,5 µg/cm² und dass es einen Reflexionsgrad im sichtbaren Bereich von mehr als 36,5% aufweist.

6. Glas nach Anspruch 5, dadurch gekennzeichnet, dass der Titangehalt des Oxidfilms etwa 14 µg/cm² beträgt.

coefficient de réflexion du rayonnement visible(%)

Teneur du film en Ti (µg/cm²)